# EUROPEAN PATENT APPLICATION

(11) **EP 2 070 747 A2**
(43) Date of publication of application: **17.06.2009**
(21) Application number: 08170705.1
(22) Date of filing: 04.12.2008
(51) Int. Cl.: B60H 1/00

(54) **Force multiplying control cable system**

(30) Priority: 14.12.2007 US 2066
(71) Applicant: Delphi Technologies, Inc., Troy, Michigan 48007 (US)
(72) Inventor: Stevenson, Mark W., Appleton, NY 14008 (US)
(74) Representative: Robert, Vincent

(57) **Abstract**

A control system for use in an HVAC unit comprises a circular pulley **(22),** a semi-circular pulley **(28),** and a cable **(30)** interconnecting the pulleys **(22, 28)** to rotate a spur gear **(32).** A flange **(44)** extends about the periphery of the semi-circular pulley **(28)** and pulley gear teeth **(70)** extend radially inwardly from the flange **(44)** and engage the spur gear teeth **(60).** The spur gear **(32)** is rotatably supported on a gear shaft **(62)** which extends through a slot **(64)** in the semi-circular pulley **(28)** that extends arcuately between two slot ends **(66).** The slot **(64)** is spaced radially between the flange **(44)** and a support shaft **(45)** of the semi-circular pulley **(28)** thereby allowing the semi-circular pulley **(28)** and the spur gear **(32)** to overlap to attain compact packaging of the system.

## Description

### Technical Field

The present invention relates to a control system for use in a heating and ventilation and air conditioning (HVAC) unit.

### Background of the Invention

Common devices used to manually control temperature in the HVAC unit are often comprised of pulleys connected to one another with small diameter cables. The size requirements of these pulley devices often leads to an inability to generate enough torque to easily overcome the resisting force of the HVAC unit. This creates force limitations within the HVAC unit which need to be considered during the design process. Current cable devices utilize single larger output pulleys, lever arm extensions, and complex gear boxes to achieve an increase in force with low input effort.

One such device comprises a first housing, a circular pulley having a circular pulley radius defining a circumference rotatably mounted to the first housing on a first axis, and a rotary control knob attached to the circular pulley for rotating the circular pulley to select a temperature. The device includes a second housing and a semi-circular pulley rotatably mounted to the second housing on the second axis for rotation between two stop positions. The semi-circular pulley has a base plate having a semi-circular pulley radius defining a semi-circular periphery extending about the second axis.

A cable connects the circular pulley to the semi-circular pulley to rotate the semi-circular pulley in response to the rotation of the circular pulley. A spur gear having a center and a spur gear radius defining a spur gear circumference is also rotatably mounted to the second housing. Spur gear teeth are disposed about the spur gear circumference and extend radially outwardly whereby the dimensions of the entire package must include the stacked widths of the circular pulley and the spur gear.

### Summary of the Invention

The invention provides such a control system wherein the semi-circular periphery of the semi-circular pulley includes a flange that extends axially from the base plate and about the periphery between two diametrically opposite flange ends on a diameter. The semi-circular pulley has pulley gear teeth disposed about the semi-circular periphery that extend radially inwardly from the flange and engage with the spur gear teeth of the spur gear to drive the spur gear.

In this disposition, the spur gear can be disposed within the periphery of the semi-circular pulley thereby providing compact packaging while also providing a mechanical advantage to increase the force with which the spur gear rotates. In other words, the dimensions of the entire package are determined by the width of the overlapping semi-circular pulley and the spur gear, i.e., the width of the semi-circular pulley alone.

### Brief Description of the Drawings

Other advantages of the present invention will be readily appreciated, as the same becomes better understood by reference to the following detailed description when considered in connection with the accompanying drawings wherein:

Figure 1 is a perspective view of the invention;

Figure 2 is a perspective view of the circular pulley with a portion of the first housing removed therefrom;

Figure 3 is a top view of the semi-circular pulley with a portion of the second housing removed therefrom;

Figure 4 is a top view of the spur gear and the semi-circular pulley in one of two stop positions;

Figure 5 is a top view of the spur gear and the semi-circular pulley in the other of two stop positions; and

Figure 6 is a perspective view of the second housing, the semi-circular pulley, the spur gear, a drive gear, and a blend door.

### Description of the Preferred Embodiments

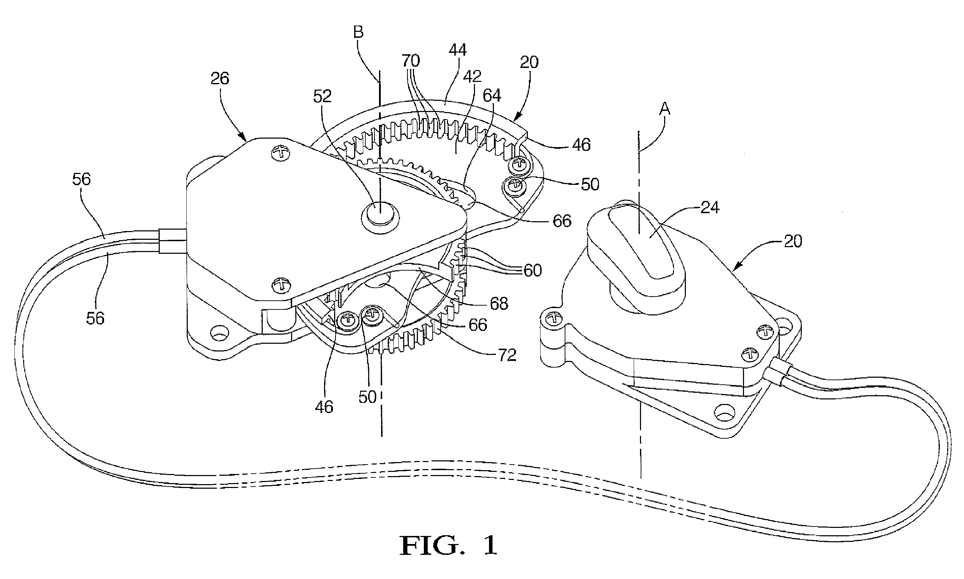

Referring to the Figures, a control system for use in a heating, ventilation, and air conditioning (HVAC) unit is shown in Figure 1. The system comprises a first housing **20** rotatably supporting a first or circular pulley **22,** which is rotated by a rotary control knob **24,** a second housing **26** which rotatably supports a second or semi-circular pulley **28,** and a cable **30** that interconnects the pulleys **22, 28** to rotate a spur gear **32.**

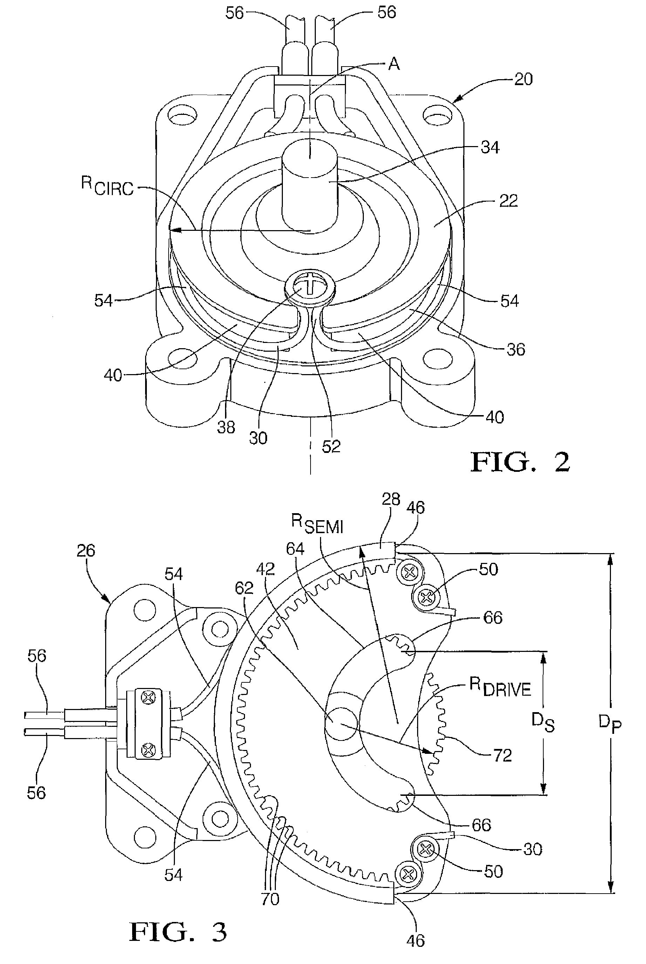

As shown in Figure 2, the first housing **20** encloses and rotatably supports the circular pulley **22.** The circular pulley **22** is rotatably mounted to the first housing **20** and has a pulley shaft **34** extending through the first housing **20** on a first axis **A.** The pulley shaft **34,** and, consequently, the circular pulley **22,** rotate around the first axis **A.** The rotary control knob **24** is attached to the pulley shaft **34** for rotating the circular pulley **22.** As a passenger rotates the control knob to select a temperature, both the pulley shaft **34** and the circular pulley **22** rotate along with the control knob, i.e., there is a 1:1 relationship between the rotation of the rotary control knob **24** and the circular pulley **22.**

The circular pulley **22** has a circular pulley radius **Rcirc** and a circumference. The circular pulley **22** defines a circular channel **36** that extends around the circumference from a connection point **38** thereby dividing the circular channel **36** circumferentially into two semi-circular sectors **40** extending in opposite directions from the connection point **38.**

As shown in Figure 3, the second housing **26** partially encloses the semi-circular pulley **28.** The semi-circular pulley **28** is rotatably mounted to the second housing **26** on a second axis **B.** The semi-circular pulley **28** rotates around the second axis **B** between two stop positions.

The semi-circular pulley **28** includes a base plate **42** and a flange **44.** The base plate **42** has a semi-circular pulley radius **Rsemi** defining a semi-circular periphery extending about an integral support shaft **45** on the second axis **B.** The flange **44** extends axially from the base plate **42** and about the periphery between two diametrically opposite flange ends **46** on a diameter **D.** The semi-circular pulley **28** defines a semi-circular channel **48** in the flange **44.** The semi-circular channel **48** extends about the semi-circular periphery between the flange ends **46.** An attachment point **50** extends axially from the base plate **42** radially inwardly from each of the flange ends **46** and on the opposite side of the diameter **D** from the flange **44.** In other words, the base plate **42** includes two attachment points **50** adjacent the opposite flange ends **46** and adjacent the diameter **D.**

The cable **30** connects the circular pulley **22** to the semi-circular pulley **28** to transmit motion and rotate the semi-circular pulley **28** in response to the rotation of the circular pulley **22.** The cable **30** has a midpoint **52** that is attached to the circular pulley **22** at the connection point **38.** The cable **30** is entrained in the circular channel **36** about the semi-circular sectors **40** of the circular pulley **22.** The cable **30** has two reaches **54** that extend from the circular pulley **22** and around opposite quadrants of the semi-circular channel **48.** Each cable **30** is attached to a respective one of the attachment points **50** on the base plate **42** of the semi-circular pulley **28.** In summary, as the circular pulley **22** is rotated via the rotary control knob **24,** the cable **30** transmits the rotational movement from the circular pulley **22** to the semi-circular pulley **28** via rectilinear movement of the cable **30** along the reaches **54** between the pulleys **22, 28.**

Each of a pair of tubes **56** is cylindrical in shape and disposed around one of the reaches **54** of the cable **30** between the circular pulley **22** and the semi-circular pulley **28.** Each tube **56** guides and shields the respective reach **54** of the cable **30.** The tubes **56** also prevent the respective reach **54** from kinking and/or from being damaged by the surrounding HVAC componentry.

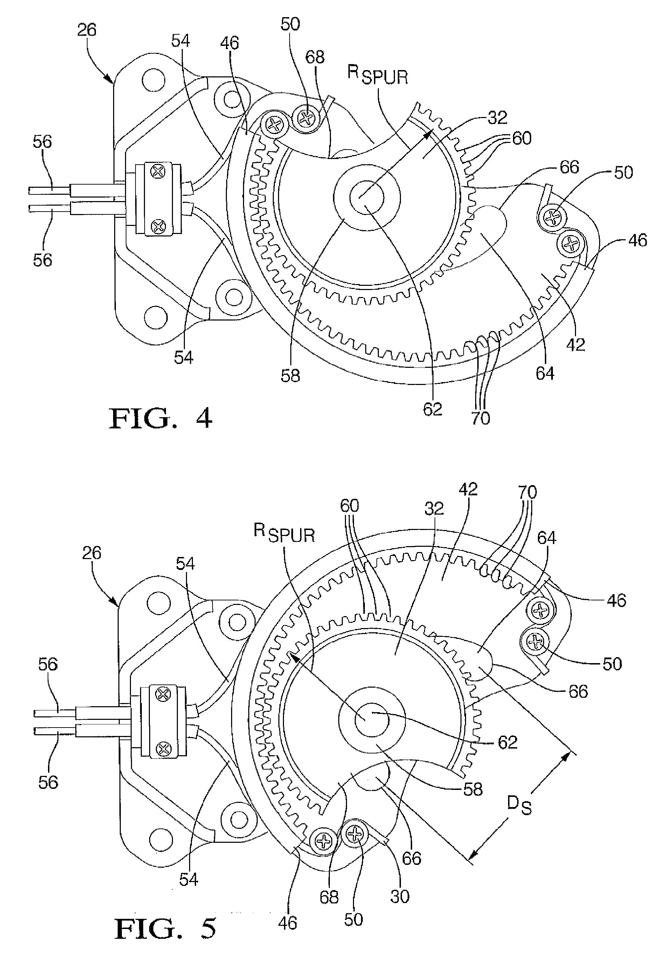

As shown in Figure 4, the spur gear **32** has a spur gear radius **Rspur** to define a spur circumference about a center **58** and is rotatably mounted to the second housing **26** at the center **58.** The spur gear **32** has spur gear teeth **60** disposed about the circumference and extending radially outwardly. A gear shaft **62** interconnects the center **58** of the spur gear **32** and the second housing **26** for rotatably supporting the spur gear **32** on the second housing **26** as the gear shaft **62** rotates along with the spur gear **32.**

The center **58** of the spur gear **32** is disposed radially between the flange **44** and the second axis **B** of the semi-circular pulley **28.** The base plate **42** defines a slot **64** that extends arcuately between slot ends **66** disposed on the diameter **D.** The slot **64** extends concentric with and spaced from the second axis **B** of the spur gear **32.** The gear shaft **62** extends through the slot **64** for allowing the semi-circular pulley **28** to rotate about the second axis **B** as the slot **64** moves along the gear shaft **62** between the stop positions. The gear shaft **62** can engage the slot ends **66** at the stop positions, one of which is shown in Figure 4 and the other of which is shown in Figure 5.

The spur gear **32** defines a cutout sector **68.** The attachment points **50** are disposed within the spur gear **32** circumference and within the cutout sector **68** of the spur gear **32** in each of the stop positions. Because of the cutout sector **68,** the attachment points **50** can be disposed within the circular periphery of the spur gear **32** for compact packaging while attaining maximum mechanical advantage.

The pulley gear teeth **70** extend radially inwardly from the flange **44** of the semi-circular pulley **28** and engage with the spur gear teeth **60** of the spur gear **32,** whereby the semi-circular pulley **28** drives the spur gear **32.**

The circular pulley radius **Rcirc** is equal to the spur gear radius **Rspur.** The semi-circular pulley radius **Rsemi** is greater than the circular pulley radius **Rcirc** (as well as the spur gear radius **Rspur**). As such, the semi-circular pulley **28** rotates fewer degrees than the circular pulley **22** rotates when the circular pulley **22** is rotated via the rotary control knob **24.** Because of the positioning of the spur gear **32** radially inwardly of the flange **44** and the difference between the semi-circular pulley radius **Rsemi** and the spur gear radius **Rspur,** the semi-circular pulley **28** and the pulley gear teeth **70** thereof drive the spur gear **32** and rotate the spur gear **32** more degrees than the rotation of the semi-circular pulley **28.** In doing so, the semi-circular pulley **28** and the spur gear **32** create a mechanical advantage. As a result, the spur gear **32** is rotated with increased force while maintaining a rotation equal to that of the circular pulley **22.** In other words, the circular pulley **22** and the spur gear **32** rotate at the same rate, however, the spur gear **32** rotates with increased force due to the mechanical advantage.

In a preferred embodiment, the semi-circular pulley radius **Rsemi** is four thirds greater than the circular pulley radius **Rcirc.** As the rotary control knob **24** is rotated 270° by the passenger, the circular pulley **22** will also rotate 270°. Accordingly, the semi-circular pulley **28** would rotate two thirds of the rotation of the circular pulley **22,** i.e., 180°. The spur gear **32** would then rotate three halves of the rotation of the semi-circular pulley **28,** i.e., 270°, in response to the rotation of the circular pulley **22** thereby increasing the force generated by the rotation of the circular pulley **22** and maintaining the rotation of the spur gear **32,** i.e., 270°, equal to the rotation of the circular pulley **22,** i.e., 270°.

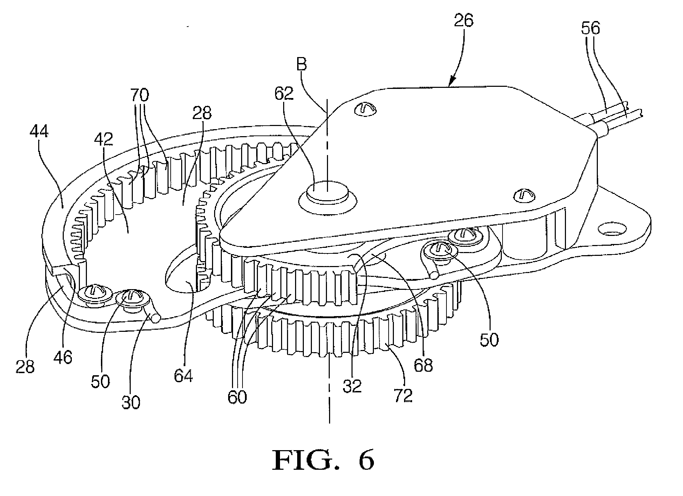

As shown in Figure 6, a drive gear **72** having a circular circumference and a drive gear radius **Rdrive** equal to the spur gear radius **Rspur** can be connected to the gear shaft **62** and disposed beneath the base plate **42** for rotating with the spur gear **32.** The drive gear **72** can be utilized to drive or rotate a device for controlling the flow of a stream of air produced by the HVAC unit. As an example, the device can be a blend door.

While the invention has been described with reference to an exemplary embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A control system for use in a heating and ventilation and air conditioning (HVAC) unit comprising;
a first housing **(20),**
a circular pulley **(22)** rotatably mounted to said first housing **(20)** on a first axis **(A)** and having a circular pulley radius **(Rcirc)** defining a circumference,
a rotary control knob **(24)** attached to said circular pulley **(22)** for rotating said circular pulley **(22)** to select a temperature,
a second housing **(26),**
a semi-circular pulley **(28)** rotatably mounted to said second housing **(26)** on said second axis **(B)** for rotation between stop positions,
said semi-circular pulley **(28)** including a base plate **(42)** having a semi-circular pulley radius **(Rsemi)** defining a semi-circular periphery extending about a second axis **(B),**
a cable **(30)** connecting said circular pulley **(22)** to said semi-circular pulley **(28)** to rotate said semi-circular pulley **(28)** in response to the rotation of said circular pulley **(22),**
a spur gear **(32)** rotatably mounted to said second housing **(26)** and having a center **(58)** and a spur gear radius **(Rspur)** defining a spur gear **(32)** circumference and spur gear teeth **(60)** disposed about said spur gear **(32)** circumference and extending radially outwardly,
said semi-circular periphery including a flange **(44)** extending axially from said base plate **(42)** and about said periphery between two diametrically opposite flange ends **(46)** on a diameter **(D),** and
said semi-circular pulley **(28)** having pulley gear teeth **(70)** disposed about said semi-circular periphery and extending radially inwardly from said flange **(44)** and engaging with said spur gear teeth **(60)** of said spur gear **(32)** for driving said spur gear **(32).**

2. A system as set forth in claim 1 wherein said semi-circular pulley radius **(Rsemi)** is greater than said circular pulley radius **(Rcirc)** and said circular pulley radius **(Rcirc)** is equal to said spur gear radius **(Rspur)** for driving said spur gear **(32)** and rotating said spur gear **(32)** more than the rotation of said semi-circular pulley **(28)** in response to the rotation of said circular pulley **(22)** thereby creating a mechanical advantage and increasing the force generated by the rotation of said circular pulley **(22)** and maintaining the rotation of said spur gear **(32)** equal to the rotation of said circular pulley **(22).**

3. A system as set forth in claim 1 or 2 wherein said center **(58)** of said spur gear **(32)** is disposed radially between said flange **(44)** and said second axis **(B)** of said semi-circular pulley **(28).**

4. A system as set forth in any of the preceding claims wherein said base plate **(42)** defines a slot **(64)** extending arcuately between slot ends **(66)** on said diameter **(D)** and concentric with and spaced from said second axis **(B).**

5. A system as set forth in claim 4 including a gear shaft **(62)** interconnecting said center **(58)** of said spur gear **(32)** and said second housing **(26)** for rotatably supporting said spur gear **(32)** on said second housing **(26)** with said gear shaft **(62)** extending through said slot **(64)** for allowing said semi-circular pulley **(28)** to rotate about said second axis **(B)** as said slot **(64)** moves along said gear shaft **(62)** between said stop positions with said gear shaft **(62)** engaging said slot ends **(66)** at said stop positions.

6. A system as set forth in claim 5 wherein said gear shaft **(62)** is connected to said spur gear **(32)** for rotating therewith.

7. A system as set forth in any of the preceding claims wherein said spur gear **(32)** defines a cutout sector **(68).**

8. A system as set forth in any of the preceding claims including an attachment point **(50)** extending axially from said base plate **(42)** radially inwardly from each of said flange ends **(46)** and on the opposite side of said diameter **(D)** from said flange **(44).**

9. A system as set forth in claims 7 and 8 in combination wherein said attachment points **(50)** are disposed within said spur gear **(32)** circumference and said cutout sector **(68)** of said spur gear **(32)** in each of said stop positions.

10. A system as set forth in any of the preceding claims wherein said circular pulley radius **(Rcirc)** is equal to said spur gear radius **(Rspur).**

11. A system as set forth in claim 10 wherein said semi-circular pulley radius **(Rsemi)** is four thirds greater than said circular pulley radius **(Rcirc)** for rotating said semi-circular pulley **(28)** two thirds of the rotation of said circular pulley **(22)** thereby driving said spur gear **(32)** and rotating said spur gear **(32)** three halves of the rotation of said semi-circular pulley **(28)** thereby creating a mechanical advantage and increasing the force generated by the rotation of said circular pulley **(22)** and maintaining the rotation of said spur gear **(32)** equal to the rotation of said circular pulley **(22).**

12. A system as set forth in claim 11 including a drive gear **(72)** having a circular circumference and a drive gear radius **(Rdrive)** equal to said spur gear radius **(Rspur)** connected to said gear shaft **(62)** and disposed beneath said base plate **(42)** for rotating with said spur gear **(32).**

13. A system as set forth in any of the preceding claims wherein said circular pulley **(22)** defines a circular channel **(36)** around said circumference from a connection point **(38)** dividing said circular channel **(36)** circumferentially into two semi-circular sectors **(40)** extending in opposite directions from said connection point **(38)** and wherein said cable **(30)** has a midpoint **(52)** attached to said circular pulley **(22)** at said connection point **(38)** and entrained in said circular channel **(36)** about said semi-circular sectors **(40)** of said circular pulley **(22).**

14. A system as set forth in any of the preceding claims wherein said semi-circular pulley **(28)** defines a semi-circular channel **(48)** in said flange **(44)** and extending about said semi-circular periphery between said flange ends **(46)** and wherein said cable **(30)** has two reaches **(54)** extending from said circular pulley **(22)** and around opposite quadrants of said semi-circular channel **(48)** with each cable **(30)** attached to a respective one of said attachment points **(50)** on said base plate **(42)** of said semi-circular pulley **(28).**

15. A system as set forth in claim 14 including a pair of tubes **(56)** each being cylindrical in shape and disposed around one of said reaches **(54)** of said cable **(30)** between said circular pulley **(22)** and said semi-circular pulley **(28)** for guiding and shielding said reaches **(54)** of said cable **(30).**
